# EUROPEAN PATENT APPLICATION

(11) **EP 4 020 639 A1**
(43) Date of publication of application: **29.06.2022**
(21) Application number: 20867486.1
(22) Date of filing: 24.09.2020
(51) Int. Cl.: H01M 4/62, H01M 10/06

(54) **LEAD-ACID BATTERY, POWER SUPPLY, AND METHOD FOR USING POWER SUPPLY**

(30) Priority: 27.09.2019 JP 2019178094
(71) Applicant: GS Yuasa International Ltd., Kisshoin, Minami-ku, Kyoto-shi, Kyoto 601-8520 (JP)
(72) Inventor: SAKATA, Wataru, Kyoto-shi, Kyoto 601-8520 (JP)
(74) Representative: Isarpatent
(86) International application number: PCT/JP2020/035917
(87) International publication number: WO 2021/060326

(57) **Abstract**

A lead-acid battery including a cell, an electrolyte solution in which the cell is immersed, a container that houses the cell and the electrolyte solution, a lid that seals the opening of the container, and an auxiliary member that assists in agitating the electrolyte solution, in which the cell includes a positive electrode plate, a negative electrode plate, and a separator interposed between the positive electrode plate and the negative electrode plate, the negative electrode plate includes a negative current collector and a negative electrode material, and the negative electrode material contains an organic condensate.

## Description

### TECHNICAL FIELD

The present invention relates to a lead-acid battery, a power supply, and a method of using a power supply.

### BACKGROUND ART

Lead-acid batteries are used in various applications in addition to in-vehicle applications and industrial applications. A lead-acid battery includes a negative electrode plate, a positive electrode plate, and an electrolyte solution. The negative electrode plate includes a current collector and a negative electrode material. An organic expander is added to the negative electrode material. As the organic expander, a synthetic organic expander is also utilized in addition to a naturally-derived organic expander such as sodium lignin sulfonate (see Patent Document 1).

In lead-acid batteries, a stratification phenomenon occurs in which the concentration of the electrolyte solution (hereinafter, also referred to as the upper electrolyte solution) in the upper portion of the container becomes thin and the concentration of the electrolyte solution (hereinafter, also referred to as the lower electrolyte solution) in the lower portion becomes thick. When stratification occurs, the sulfuric acid specific gravity in the lower electrolyte solution increases, and sulfation progresses at the lower portion of the negative electrode plate, and the low-temperature high-rate performance of the lead-acid battery decreases. Hence, in general, the stratification is eliminated by overcharging the lead-acid battery to generate gas and allowing the electrolyte solution to flow by the gas.

However, when the amount of overcharge increases, corrosion of the positive current collector progresses, and this not only shortens the battery life but also leads to an increase in the frequency of water addition due to the decrease in water content in the electrolyte solution and an increase in charge time. Furthermore, when the amount of overcharge increases, the temperature of the electrolyte solution rises, and this causes the deterioration of the plate to be accelerated.

Hence, Patent Document 2 proposes an electrolyte solution agitator, which has a shaft rod that connects two up and down pistons in a cylindrical case having a liquid inlet near the bottom of the battery, a liquid outlet near the electrolyte solution surface, a gas inlet in the battery above the electrolyte solution surface, and a gas outlet open to the atmosphere at the top, and has a configuration in which the upper piston can move from the upper portion of the gas inlet to the upper portion of the gas outlet, the lower piston has a valve that allows the electrolyte solution to pass only from the bottom to the top of the lower piston and is configured to be able to move from the upper portion of the liquid inlet to the lower portion of the liquid outlet, and the cylindrical case is disposed between the element and the inner wall of the container.

Patent Document 3 proposes a battery electrolyte solution mixing device for mixing the low density electrolyte solution of a battery and the high density electrolyte solution at the lower part, which includes a support installed so as to have a space apart from the inner wall surface of the battery case as a wall surface protruding upward; a bottom that extends in one direction from the upper part of the support to form the bottom face; one side that protrudes upward from one side of the upper face of the bottom and extends along one side corner of the bottom; and the other side that protrudes upward from the upper face of the other side of the bottom and extends to the anterior side corner of the bottom, and in which the one side and the other side are formed at a distance to be apart from each other from the ends and form an inlet through which the electrolyte solution flows into the inside of the bottom, the support is installed so as to be apart from the inner wall surface of the battery case, and a vertical flow path is formed therebetween so that the electrolyte solution flowing into between the other side and one side moves in the vertical direction by the kinetic energy applied to the electrolyte solution.

Patent Document 4 proposes a mixing member, which is a mixing member (1) designed to be installed inside the housing of an electrochemical accumulator operated by an electrolyte solution in order to mix the electrolyte solution as a result of the force and/or movement applied to the accumulator during operation, and in which this mixing member is designed as a hollow body provided with at least one opening in each of the facing end regions, the channels leading to the at least one opening in the facing end regions are defined by the material of the mixing member, and in the mixing member formed as a hollow body, this mixing member has one rib or a plurality of ribs for mounting and/or spacers, which are designed to protrude outside the mixing member and come into contact with the housing portion of the accumulator in order to fix the mixing member in the accumulator and/or to mount a specific portion of the mixing member to the housing portion.

Patent Document 5 instructs an in-vehicle electrolyte solution agitator having a pump that supplies gas such as the atmosphere, an air header that stores the gas supplied from the pump, a hose that extends from the air header to the vicinity of the bottom face of the container via the vent plug, and a control unit that controls the pump.

### PRIOR ART DOCUMENTS

### PATENT DOCUMENTS

Patent Document 1: WO 2013/150754 A
Patent Document 2: JP-A-60-37651
Patent Document 3: JP-A-2013-232395
Patent Document 4: JP-T-2017-505506
Patent Document 5: JP-A-2016-177982

### SUMMARY OF THE INVENTION

### PROBLEMS TO BE SOLVED BY THE INVENTION

At the end stage of charge of a lead-acid battery, electric power is consumed to generate gas, and a fully charged state (SOC 100%) is achieved by, for example, performing charge to the electric power corresponding to about 110% of the rated capacity. After that, as overcharge continues until the amount of charge reaches about 120% of the rated capacity, the electrolyte solution is agitated by gas. In other words, overcharge is usually performed by about 20%.

Meanwhile, in lead-acid batteries having a mechanism for agitating the electrolyte solution as in Patent Documents 2 and 3, overcharge to eliminate stratification can be omitted and thus the amount of overcharge can be diminished by about 10% compared to that in lead-acid batteries, which do not have such a mechanism.

However, when charge-discharge is repeated, the agitation effect is gradually saturated, the progress of stratification cannot be suppressed, and the low-temperature high-rate performance decreases. For example, when charge-discharge is repeated in which discharge is performed for 3 hours at a current (A) to be 0.25 time the numerical value of Ah described as the rated capacity and then charge is performed to the state-of-charge (SOC) of 110% at a current (A) to be 0.18 time the numerical value of Ah described as the rated capacity, the agitation effect is saturated in about 300 cycles, and the low-temperature high-rate performance significantly decreases in about 500 cycles.

### MEANS FOR SOLVING THE PROBLEMS

An aspect of the present invention relates to a lead-acid battery including a cell, an electrolyte solution in which the cell is immersed, a container that houses the cell and the electrolyte solution, a lid that seals the opening of the container, and an auxiliary member that assists in agitating the electrolyte solution, in which the cell includes a positive electrode plate, a negative electrode plate, and a separator interposed between the positive electrode plate and the negative electrode plate, the negative electrode plate includes a negative current collector and a negative electrode material, and the negative electrode material contains an organic condensate.

### ADVANTAGES OF THE INVENTION

According to the present invention, the decrease in low-temperature high-rate performance is significantly suppressed when the charge-discharge cycle of a lead-acid battery is repeated.

### BRIEF DESCRIPTION OF THE DRAWINGS

Fig. 1 is a front view (a), a top view (b), and a side view (c) of an example of a lead-acid battery according to the present invention.
Fig. 2 is a cross-sectional view taken along a line II-II of the lead-acid battery in Fig. 1.
Fig. 3 is a front view schematically illustrating the appearance of an example of a blower.
Fig. 4 is a conceptual diagram schematically illustrating a part of an example of an assembled battery in which a plurality of blowers are connected.
Fig. 5 is a block diagram illustrating the configuration of an example of a power supply according to the present invention.
Fig. 6 is a perspective view (a) and a cross-sectional view (b) schematically illustrating an example of a swing-type agitator.
Fig. 7 is an explanatory diagram illustrating the principle of electrolyte solution agitation by a swing-type agitator.
Fig. 8 is a diagram illustrating the relation between the low-temperature high-rate discharge performance of batteries R1, R2, and E1 to E3 and the number of charge-discharge cycles.
Fig. 9 is a diagram illustrating the low-temperature high-rate discharge performance of batteries R1, R2, R3 to R5, and E1 to E3 in the 500th cycle in comparison.
Fig. 10 is a diagram illustrating the relation between the content of an organic expander other than lignin contained in a negative electrode material and the low-temperature high-rate discharge performance in the 500th cycle.
Fig. 11 is a diagram illustrating the relation between the content of an organic expander other than lignin contained in a negative electrode material and the initial capacity.

### MODE FOR CARRYING OUT THE INVENTION

### [Lead-acid battery]

The lead-acid battery according to an embodiment of the present invention includes a cell, an electrolyte solution in which the cell is immersed, a container that houses the cell and the electrolyte solution, a lid that seals the opening of the container, and an auxiliary member that assists in agitating the electrolyte solution. The cell includes a positive electrode plate, a negative electrode plate, and a separator interposed between the positive electrode plate and the negative electrode plate. The negative electrode plate includes a negative current collector and a negative electrode material, and the negative electrode material contains an organic condensate as an organic expander. The organic expander refers to an organic compound among compounds having a function of suppressing shrinkage of lead as a negative active material when charge-discharge of the lead-acid battery is repeated. The organic expander includes a lignin compound in addition to the organic condensate. The organic condensate is a synthetic product that can be obtained by utilizing a condensation reaction and does not include a lignin compound. Lignin compounds commonly used in lead-acid batteries are natural materials and thus are excluded from organic condensates, which are synthetic products. Synthetic expanders used in lead-acid batteries are usually organic condensates.

When the lead-acid battery is equipped with an auxiliary member that assists in agitating the electrolyte solution and when the amount of overcharge is diminished as well, it is possible to agitate the electrolyte solution at all times, for example, at predetermined timing or by the inertial force due to the shift of the lead-acid battery, and the like. Therefore, at the initial stage of charge-discharge cycles, stratification can be eliminated when the amount of overcharge is diminished by about 10% as well. However, when the number of charge-discharge cycles exceeds 300 cycles, it is difficult to sufficiently agitate the electrolyte solution when an auxiliary member that assists in agitating the electrolyte solution is equipped as well. Hence, when the amount of overcharge is diminished by about 10%, the low-temperature high-rate performance decreases to the same extent as that when an auxiliary member that assists in agitating the electrolyte solution is not equipped and the amount of overcharge is not diminished. In other words, the advantage acquired by the use of an auxiliary member that assists in agitating the electrolyte solution is greatly impaired.

When the agitation of the electrolyte solution is assisted by using the auxiliary member as well, the negative electrode material gradually expands as the charge-discharge cycle is repeated, the distance between the positive electrode plate and the negative electrode plate becomes narrower, and the agitation efficiency of the electrolyte solution decreases. Hence, corrosion of the positive current collector due to the diminishment in the amount of overcharge, a decrease in water content in the electrolyte solution, deterioration of the plate due to the temperature rise of the electrolyte solution, and the like can be suppressed, but stratification progresses. As stratification progresses, it is difficult to sufficiently suppress the progress of sulfation at the lower portion of the negative electrode plate, and it is considered that the low-temperature high-rate performance of the lead-acid battery decreases.

On the other hand, when the negative electrode material contains an organic condensate, the organic condensate acts as an expander, and the expansion of the negative electrode material during the charge-discharge cycles is suppressed, thus the high agitation efficiency of the electrolyte solution due to the use of the auxiliary member is maintained, and stratification is suppressed for a long period of time. This suppresses the progress of sulfation at the lower portion of the negative electrode plate, the amount of lead sulfate accumulated significantly decreases, and the lead sulfate that can be accumulated on the negative electrode plate is easily refined. Hence, the decrease in low-temperature high-rate performance of the lead-acid battery is significantly suppressed, for example, when the charge-discharge cycle is repeated about 500 cycles. Specifically, when charge-discharge is repeated in which discharge is performed for 3 hours at a current (A) to be 0.25 time the numerical value of Ah described as the rated capacity and then charge is performed to the state-of-charge (SOC) of 110% at a current (A) to be 0.18 time the numerical value of Ah described as the rated capacity, the agitation effect of the electrolyte solution by the use of the auxiliary member is not saturated in about 500 cycles as well, and the low-temperature high-rate performance is favorably maintained.

The auxiliary member may be, for example, a blower that sends air to the electrolyte solution. It is preferable that the blower has, for example, a tubular shape and can blow air from the lower portion of the container to the electrolyte solution. One end of the blower is installed near the lower end of the element so as not to be close to the bottom of the container. This makes it possible to avoid winding up of sediment when the sediment is deposited on the bottom of the container as well.

For example, the lid may be provided with at least one through hole and the blower may be inserted into the through hole. A so-called electrolyte solution filling hole or gas vent hole may be utilized as the through hole, but it is preferable to provide a dedicated through hole for allowing the blower to pass separately from the electrolyte solution filling hole or the gas vent hole so that the structure is not complicated. The through hole may be provided at, for example, at least one of the four corners of the lid or in the center of the short side surface of the lid. One end of the blower may be immersed in the electrolyte solution, and the other end may communicate with the outside of the lid via the through hole. The other end is connected to an air supplier that pumps air.

When the assembled battery is composed of a plurality of lead-acid batteries, the blower may be connected to the plurality of lead-acid batteries by being branched into a plurality. In this case, it is possible to circulate air to the plurality of lead-acid batteries at the same time by one air supplier.

A power supply is configured by combining a lead-acid battery provided with a blower with an air supplier that sends air to the blower. The air supplier is only required to have a structure that can be connected to the blower at arbitrary timing, and may have a structure such that the air supplier can be separated from the blower during use or discharge of the lead-acid battery. The air supplier is not particularly limited, and a turbo or positive displacement pump or compressor can be utilized.

The power supply may include a charger that performs charge of the lead-acid battery. As the timing for supplying air from the blower into the electrolyte solution of the lead-acid battery, it is suitable to supply air when charge of the lead-acid battery is performed. By mounting an air supplier on the charger, the convenience is improved when air is supplied into the electrolyte solution at the timing to perform charge of the lead-acid battery. In other words, the method of using the power supply includes a step of operating the air supplier to send air into the electrolyte solution via the blower during or after charge of the lead-acid battery by the charger and agitating the electrolyte solution. When the air supplier is mounted on the charger, there is an advantage that the power supply can be compactly configured. As a matter of course, it is not always necessary to mount the air supplier on the charger, and the power supply may include the charger and the air supplier separately.

The auxiliary member may be an agitator that agitates the electrolyte solution by moving in the lead-acid battery. Such an agitator may have a function of agitating the electrolyte solution by moving in response to a change in the container without supplying electric power to operate the agitator. Hereinafter, an agitator that agitates the electrolyte solution by moving in a lead-acid battery is referred to as a mixing element. The movement of the mixing element in the lead-acid battery is only required to be movement relative to that of the electrolyte solution.

The mixing element usually has a structure so as to be housed in the container of the lead-acid battery together with the cell and the electrolyte solution. The mixing element is not particularly limited, and a known device can be used. The mixing element agitates the electrolyte solution by moving, for example, in response to the inertial force applied to the lead-acid battery or the change in the pressure inside the container. Examples of such a device include devices as described in Patent Documents 2 to 4 above. In other words, a piston-type agitator that mixes the upper electrolyte solution and the lower electrolyte solution by the change in the pressure inside the container, or a swing-type agitator that mixes the upper electrolyte solution and the lower electrolyte solution by the inertial force generated when the vehicle drives may be utilized. The inertial force imparts kinetic energy to the electrolyte solution in the container.

The lead-acid battery is only required to be a flooded-type (vent-type) lead-acid battery. Among others, in a lead-acid battery having a high battery height (particularly a lead-acid battery for electric vehicle), which is likely to undergo stratification, the configuration of the lead-acid battery according to the present embodiment is advantageous. The lead-acid battery for electric vehicle may have a height of, for example, 280 mm or more, 320 mm or more, 350 mm or more, or 400 mm or more.

In the present specification, the fully charged state of the flooded-type lead-acid battery is defined by the definition of JIS D 5301: 2006. More specifically, the following state is defined as a fully charged state: the lead-acid battery is charged with electricity in a water bath at 25°C ± 2°C at a current (A) to be 0.2 time the numerical value of Ah described as the rated capacity until the terminal voltage during charge measured every 15 minutes or the electrolyte solution density subjected to temperature correction to 20°C exhibits a constant value at three significant digits continuously three times. The numerical value described as the rated capacity is a numerical value in which the unit is Ah. The unit of the current set based on the numerical value indicated as the rated capacity is A.

The lead-acid battery in the fully charged state refers to a battery obtained by fully charging a formed lead-acid battery with electricity. Full charge of the lead-acid battery may be performed immediately after the formation or after a lapse of time from the formation as long as the full charge is performed after the formation. For example, the lead-acid battery after formation and in use (preferably in the initial stage of use) may be fully charged with electricity. The battery at the initial stage of use refers to a battery that has not been used for a long time and has hardly deteriorated.

Hereinafter, the lead-acid battery according to an embodiment of the present invention will be described for each of the main constituent elements, but the present invention is not limited to the following embodiment.

### (Negative electrode plate)

The negative electrode plate includes a negative current collector and a negative electrode material. The negative electrode material is the portion of the negative electrode plate excluding the negative current collector. The negative electrode material contains an organic condensate as an organic expander.

A member such as a mat or a pasting paper may be stuck to the negative electrode plate. Such a member (sticking member) is used integrally with the negative electrode plate and is thus included in the negative electrode plate. When the negative electrode plate includes a sticking member, the negative electrode material is the portion of the negative electrode plate excluding the negative current collector and the sticking member. However, when the sticking member such as a mat is stuck to a separator, the thickness of the sticking member is included in the thickness of the separator.

The negative electrode plate can be formed in such a manner that a negative current collector is coated or filled with a negative electrode paste, which is then cured and dried to fabricate a non-formed negative electrode plate, and thereafter, the non-formed negative electrode plate is formed. The negative electrode paste is prepared by adding water and sulfuric acid to lead powder and an organic expander, and various additives if necessary, and mixing the mixture. At the time of curing, it is preferable to cure the non-formed negative electrode plate at a temperature higher than room temperature and a high humidity.

The formation can be performed by charging the element with electricity in a state where the element including the non-formed negative electrode plate is immersed in the electrolyte solution containing sulfuric acid in the container of the lead-acid battery. However, the formation may be performed before the lead-acid battery or the element is assembled. The formation produces spongy lead.

### (Negative current collector)

The negative current collector has a frame rib portion having lugs and a grid portion following the frame rib portion. The grid portion has a plurality of quadrangular squares.

The negative current collector may be formed by casting lead (Pb) or a lead alloy, or may be formed by processing a lead sheet or a lead alloy sheet. Examples of the processing method include expanding processing and punching processing. It is preferable to use a negative electrode grid as the negative current collector since the negative electrode material is easily supported.

The lead alloy used for the negative current collector may be any of a Pb-Sb-based alloy, a Pb-Ca-based alloy, or a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed at a part of the negative current collector. The surface layer may be formed at the lug of the negative current collector. The surface layer at the lug may contain Sn or an Sn alloy.

### (Negative electrode material)

The negative electrode material contains a negative active material (lead or lead sulfate) that exhibits a capacity through a redox reaction. The negative electrode material may contain an expander, a carbonaceous material, and/or other additives. Examples of the additives include barium sulfate and fibers (resin fibers and the like), but are not limited thereto. The negative active material in the charged state is spongy lead, but the non-formed negative electrode plate is usually fabricated using lead powder.

### (Organic expander)

The negative electrode material contains an organic condensate as an organic expander as described above. As the organic condensate, for example, one synthesized by a known method may be used, or a commercially available product may be used. The negative electrode material may contain one kind of organic expander or two or more kinds of organic expanders.

The negative electrode material may contain a lignin compound as an organic expander, but it is necessary to contain an organic condensate as an organic expander other than the lignin compound. When the negative electrode material contains an organic condensate, the expansion of the negative electrode material during the charge-discharge cycle is significantly suppressed, and the circulation of the electrolyte solution between the positive electrode plate and the negative electrode plate is less likely to be inhibited for a long period of time. As a result, the high agitation efficiency of the electrolyte solution due to the use of the auxiliary member is maintained, and stratification is suppressed for a long period of time. This suppresses the progress of sulfation and the coarsening of lead sulfate crystals, and the low-temperature high-rate performance of the lead-acid battery is favorably maintained, for example, when the charge-discharge cycle is repeated about 500 cycles.

When gas is generated by overcharge, the gas is generated between the positive electrode plate and the negative electrode plate. Therefore, compared to the case where air is supplied to the bottom of the electrolyte solution using, for example, an air supplier, the force to agitate the electrolyte solution is small but the circulation of the electrolyte solution between the positive electrode plate and the negative electrode plate is relatively less likely to be inhibited. Meanwhile, in a lead-acid battery in which the electrolyte solution is initiatively agitated by utilizing an auxiliary member that assists in agitating the electrolyte solution, it is difficult to evenly circulate gas between the positive electrode plate and the negative electrode plate, and it is thus considered that the expansion of the negative electrode material significantly affects the progress of stratification. In other words, the progress of stratification due to the expansion of the negative electrode material is a problem peculiar to a lead-acid battery in which the electrolyte solution is initiatively agitated by utilizing an auxiliary member that assists in agitating the electrolyte solution. By the use of an organic condensate (particularly a predetermined condensate), such a problem can be effectively solved.

Unlike naturally-derived lignin compounds, organic condensates are likely to form a portion having a planar structure in the molecule. Hence, an organic condensate once eluted is easily adsorbed on the lead contained in the negative electrode plate. The organic condensate adsorbed on lead has an action of refining the structure of spongy lead, improving the mechanical strength of spongy lead, improving the binding force between the lead atoms or between the negative current collector and the negative electrode material, and suppressing the expansion of the negative electrode material. On the other hand, a lignin compound has a complicated three-dimensional network structure and is more easily eluted from the negative electrode material than an organic condensate. A lignin compound is inferior in adsorptivity to lead contained in the negative electrode plate compared to an organic condensate. Hence, in the case of a lignin compound, it is difficult to obtain an effect of improving the binding force and suppressing the expansion of the negative electrode material as described above.

Furthermore, when an organic condensate is used, the amount of sediment generated greatly decreases. In a lead-acid battery including an auxiliary member that assists in agitating the electrolyte solution to initiatively agitate the electrolyte solution, the winding up of sediment occurs as the electrolyte solution is agitated. In particular, when one end of the blower is installed near the bottom of the container and air is supplied to the bottom of the electrolyte solution using an air supplier, the force for agitation is remarkably greater than when the electrolyte solution is agitated by generating gas by overcharge. Here, when a lignin compound is used as an organic expander, the generation of sediment relatively frequently occur, and thus it has turned out that the winding up of sediment becomes unexpectedly violent, the sediment is deposited on the strap portion above the cell, and an upper short circuit is dramatically likely to occur. It can be said that such an occurrence of upper short circuit is also a problem peculiar to a lead-acid battery in which the electrolyte solution is initiatively agitated by utilizing an auxiliary member that assists in agitating the electrolyte solution. Meanwhile, when an organic condensate is used, such a problem of upper short circuit is significantly decreased.

When the deep discharge cycle of the lead-acid battery is repeated, the negative electrode material gradually expands as a whole while repeatedly expanding and contracting, and gradually falls off to generate sediment. It is considered that the reason why the amount of sediment generated is decreased when an organic condensate is used is that the pore size of the negative electrode material is easily maintained and the effect of suppressing the expansion of the negative electrode material is high. Meanwhile, when a lignin compound is used, the effect of suppressing the expansion of the negative electrode material is small, and thus the amount of sediment generated increases.

Here, the lignin compound includes lignin derivatives and the like in addition to lignin. Lignin derivatives include compounds having lignin-like three-dimensional structures. Examples of the lignin derivatives include at least one selected from the group consisting of modified lignin, lignin sulfonic acid, modified lignin sulfonic acid, and salts thereof (alkali metal salts (sodium salts and the like), magnesium salts, calcium salts and the like).

The organic condensate as an organic expander (hereinafter, simply referred to as a condensate) is a synthetic product and is also generally referred to as a synthetic expander. The condensate may contain a unit of an aromatic compound (hereinafter, also referred to as an aromatic compound unit). The unit of an aromatic compound refers to a unit derived from an aromatic compound incorporated in the condensate. In other words, the aromatic compound unit is a residue of the aromatic compound. The condensate may contain one kind of aromatic compound unit or a plurality of kinds of aromatic compound units.

Examples of the condensate include a condensate of an aromatic compound with an aldehyde compound. Such a condensate can be synthesized by reacting an aromatic compound with an aldehyde compound. Here, by performing the reaction of an aromatic compound with an aldehyde compound in the presence of a sulfite or using an aromatic compound containing sulfur element (for example, bisphenol S) as an aromatic compound, a condensate containing sulfur element can be obtained. For example, the sulfur element content in the condensate can be adjusted by adjusting the amount of sulfite and/or the amount of the aromatic compound containing sulfur element. When other raw materials are used as well, this method may apply. The aromatic compound to be condensed to obtain a condensate may be one kind or two or more kinds. The aldehyde compound may be an aldehyde (for example, formaldehyde) or a condensate of an aldehyde.

The aromatic compound may have a sulfur-containing group. In other words, the condensate may be an organic polymer, which contains a plurality of aromatic rings in the molecule and also contains a sulfur element as a sulfur-containing group. The sulfur-containing group may be directly bonded to an aromatic ring contained in the aromatic compound, and for example, may be bonded to the aromatic ring as an alkyl chain having a sulfur-containing group. Among the sulfur-containing groups, a sulfonic acid group or a sulfonyl group, which is in a stable form, is preferable. The sulfonic acid group may exist in an acid form or in a salt form like a Na salt.

The sulfur-containing group is a functional group exhibiting strong negative polarity. Such functional groups form stable bonds with water molecules, hydrogen ions, and hydrogen sulfate ions in the electrolyte solution, and thus tend to be unevenly distributed on the surface of the condensate. Since the functional group unevenly distributed on the surface is charged, the aggregation of colloidal particles in the condensate is restricted and the colloidal particle size is likely to be small as electrostatic repulsion occurs between the aggregates of the condensate. As a result, it is considered that the pore size of the negative electrode material is small and the resistivity of the negative electrode material is likely to decrease. In this regard, it is considered that a condensate containing an aromatic compound unit having a sulfur-containing group has a great action of refining the structure of spongy lead at the interface between lead atoms or between the current collector and the negative electrode material, and improves the mechanical strength of spongy lead. As described above, a condensate containing an aromatic compound unit having a sulfur-containing group has a great effect of suppressing the expansion of the negative electrode material.

Examples of the aromatic ring contained in the aromatic compound include a benzene ring and a naphthalene ring. When the aromatic compound has a plurality of aromatic rings, the plurality of aromatic rings may be linked by a direct bond, a linking group (for example, an alkylene group (including an alkylidene group), a sulfone group, and the like), or the like. Examples of such a structure include bisarene structures (biphenyl, bisphenylalkane, bisphenylsulfone, and the like).

Examples of the aromatic compound include compounds having the aromatic ring and a functional group such as a hydroxy group or an amino group. A functional group such as a hydroxy group or an amino group may be directly bonded to the aromatic ring, or may be bonded as an alkyl chain having a functional group. The hydroxy group also includes salts (-OMe) of a hydroxy group. The amino group also includes salts of an amino group (salts with anions). Examples of Me include alkali metals (Li, K, Na, and the like) and Group 2 metals of the periodic table (Ca, Mg, and the like).

The hydroxy group contained in the aromatic compound is preferably a phenolic hydroxy group. The condensate of an aromatic compound having a phenolic hydroxy group with an aldehyde compound is in a state of being condensed mainly at at least either of the ortho-position or the para-position (particularly the ortho-position) with respect to the phenolic hydroxy group. Meanwhile, a condensate of a monocyclic aromatic compound having an amino group with an aldehyde compound is in a state of being condensed via an amino group. Hence, in the case of using a monocyclic aromatic compound having a phenolic hydroxy group, it is considered that the torsion between aromatic rings in the organic expander molecule is small, and the compound is more likely to take a planar structure and thus is more likely to act on lead compared to the case of using a monocyclic aromatic compound having an amino group. An organic condensate having a phenolic hydroxy group is more likely to be negatively charged than an organic condensate having an amino group or the like, and thus exhibits higher adsorptivity to lead.

Meanwhile, when the organic condensate has a nitrogen atom-containing group such as an amino group, the negative chargeability of the organic condensate is low. Hence, it is preferable that the content of the nitrogen atom-containing group in the organic condensate is low. The nitrogen atom content in the organic expander is preferably 1% by mass or less, and may be 0.1% by mass or less.

The aromatic compound to be the source of the aromatic compound unit may include at least one selected from the group consisting of a bisarene compound and a monocyclic compound. In this case, when the lead-acid battery experiences a temperature environment higher than normal temperature as well, there is a tendency that the low-temperature high-rate performance is less likely to be impaired. The details of the mechanism are not clear, but it is considered that the reason why the low-temperature high-rate performance is less likely to be impaired is that the amount of organic condensate eluting from the negative electrode material into the electrolyte solution (sulfuric acid aqueous solution) at high temperatures decreases.

Examples of the bisarene compound include bisphenol compounds, hydroxybiphenyl compounds, and bisarene compounds having an amino group (bisarylalkane compounds having an amino group, bisarylsulfone compounds having an amino group, biphenyl compounds having an amino group, and the like). Among these, bisphenol compounds are preferable.

As the bisphenol compounds, bisphenol A, bisphenol S, bisphenol F, and the like are preferable. The bisphenol compounds may include at least one selected from the group consisting of bisphenol A and bisphenol S. Among these, the condensate containing the unit of bisphenol S has a sulfur-containing group, thus the colloidal particle size is likely to be small and the small pore size of the negative electrode material is likely to be maintained, as a result, the effect of suppressing the expansion of the negative electrode material is further greater. When the bisphenol compound includes both bisphenol A and bisphenol S, the molar ratio of bisphenol A to bisphenol S is only required to be, for example, in a range of 1 : 9 to 9 : 1, and is preferably in a range of 2 : 8 to 8 : 2.

The bisphenol compound is only required to have a bisphenol skeleton, and the bisphenol skeleton may have a substituent. In other words, bisphenol A is only required to have a bisphenol A skeleton, and the skeleton may have a substituent. Bisphenol S is only required to have a bisphenol S skeleton, and the skeleton may have a substituent.

As the monocyclic compound, a hydroxyarene compound, an aminoarene compound and the like are preferable. Among these, a hydroxyarene compound is preferable.

Examples of the hydroxyarene compound include a hydroxynaphthalene compound and a phenol compound. For example, it is preferable to use a phenol sulfonic acid compound (such as phenol sulfonic acid or a substitute thereof), which is a phenol compound. The condensate containing the unit of a phenol sulfonic acid compound has a phenolic hydroxy group and a sulfonic acid group. Both the phenolic hydroxy group and the sulfonic acid group exhibit strong negative polarity and high affinity for metals. In addition to this, the phenol sulfonic acid makes it easy for the condensate to take a planar structure. Therefore, the condensate containing the unit of a phenol sulfonic acid compound is easily adsorbed to the negative current collector and has the effect of enhancing the binding force between the negative current collector and the negative electrode material. The condensate containing the unit of a phenol sulfonic acid compound has a low solubility in the electrolyte solution (sulfuric acid aqueous solution) and is likely to remain in the negative electrode material when deep discharge cycles are repeated as well. Therefore, the effect of suppressing the expansion of the negative electrode material is further greater. As already mentioned, the phenolic hydroxy group also includes a salt (-OMe) of the phenolic hydroxy group.

Examples of the aminoarene compound include aminonaphthalene compounds and aniline compounds (such as aminobenzenesulfonic acid and alkylaminobenzenesulfonic acid).

The aromatic compound to be the source of the aromatic compound unit may include both a bisarene compound and a monocyclic compound. In this case, the organic condensate has a lower solubility in the electrolyte solution (sulfuric acid aqueous solution), and most of the organic condensates is likely to remain in the negative electrode material after undergoing deep discharge cycles as well. Therefore, the effect of suppressing the expansion of the negative electrode material is further greater.

When the aromatic compound to be the source of the aromatic compound unit may include both a bisarene compound and a monocyclic compound, the molar ratio of the bisarene compound to the monocyclic compound is only required to be, for example, in a range of 1 : 9 to 9 : 1, and is preferably in a range of 2 : 8 to 8 : 2.

The sulfur element content in the organic condensate may be, for example, 2000 µmol/g or more, preferably 3000 µmol/g or more. In this case, the amount of sulfur-containing groups contained in the organic condensate is large, the colloidal particle size of the organic condensate is likely to be small, and the effect of suppressing the expansion of the negative electrode material is further greater. However, the organic condensate may include those having a sulfur element content of less than 2000 µmol/g.

The sulfur element content in the organic expander being X pmol/g means that the content of the sulfur element contained per 1 g of the organic expander is X pmol.

The upper limit of the sulfur element content in the organic condensate is not particularly limited, is only required to be, for example, 9000 pmol/g or less, and may be 8000 pmol/g or less or 7000 pmol/g or less. These lower limit values and upper limit values can be combined arbitrarily.

The sulfur element content in the organic condensate may be, for example, 2,000 pmol/g or more (or 3,000 pmol/g or more) and 9,000 pmol/g or less, 2,000 pmol/g or more (or 3,000 pmol/g or more) and 8,000 pmol/g or less, or 2,000 pmol/g or more (or 3,000 pmol/g or more) and 7,000 pmol/g or less.

A weight average molecular weight (Mw) of the organic condensate is preferably, for example, 7,000 or more. The Mw of the organic condensate is, for example, 100,000 or less, and may be 20,000 or less.

In the present specification, the organic condensate or the Mw of the organic condensate is determined by GPC. A standard substance used for determining the Mw is sodium polystyrene sulfonate.

The Mw is measured under the following conditions using the following apparatus.
GPC apparatus: Build-up GPC system SD-8022/DP-8020/AS-8020/CO-8020/UV-8020 (manufactured by Tosoh Corporation)
Column: TSKgel G4000SWXL, G2000SWXL (7.8 mm I.D. × 30 cm) (manufactured by Tosoh Corporation)
Detector: UV detector, λ = 210 nm
Eluent: Mixed solution of NaCl aqueous solution having a concentration of 1 mol/L: acetonitrile (volume ratio = 7 : 3)
Flow rate: 1 mL/min.
Concentration: 10 mg/mL
Injection amount: 10 pL
Standard substance: Na polystyrene sulfonate (Mw = 275,000, 35,000, 12,500, 7,500, 5,200, 1,680)

When the negative electrode material contains a lignin compound in addition to the organic condensate, the sulfur element content in the lignin compound is, for example, 1000 pmol/g or less, and may be 800 pmol/g or less. The lower limit of the sulfur element content in the lignin compound is not particularly limited, and is, for example, 400 pmol/g or more.

The Mw of the lignin compound is, for example, less than 7,000. The Mw of the lignin compound is, for example, 3,000 or more.

When the organic condensate and the lignin compound are used concurrently, the mass ratio thereof can be arbitrarily selected. However, from the viewpoint of significantly improving the binding force between the negative current collector and the negative electrode material, the ratio of the organic condensate to the total amount of the organic condensate and the lignin compound is preferably 20% by mass or more, may be 50% by mass or more, or may be 80% by mass or more.

It is more advantageous that the content of the organic expander contained in the negative electrode material is higher in order to maintain the low-temperature high-rate performance of the lead-acid battery when the charge-discharge cycle is repeated. However, when the content of the organic expander contained in the negative electrode material is excessively high, the initial capacity of the lead-acid battery tends to decrease. From the above, the content of the organic expander contained in the negative electrode material is, for example, 0.01% by mass or more, and may be 0.03% by mass or more. The content of the organic expander is, for example, 0.5% by mass or less, and may be 0.3% by mass or less. These lower limit values and upper limit values can be combined arbitrarily.

The content of the organic expander contained in the negative electrode material may be 0.01% by mass or more and 0.5% by mass or less, 0.03% by mass or more and 0.5% by mass or less, 0.01% by mass or more and 0.3% by mass or less, or 0.03% by mass or more and 0.3% by mass or less.

### (Barium sulfate)

The negative electrode material can contain barium sulfate. The content of barium sulfate in the negative electrode material is, for example, 0.05% by mass or more and may be 0.10% by mass or more. The content of barium sulfate in the negative electrode material is 3% by mass or less and may be 2% by mass or less. These lower limit values and upper limit values can be combined arbitrarily.

The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

### (Carbonaceous material)

The negative electrode material may contain a carbonaceous material. As the carbonaceous material, carbon black, graphite, hard carbon, soft carbon, and the like can be used. Examples of the carbon black include acetylene black, furnace black, and lamp black. Furnace black also includes ketjen black (product name). The graphite is only required to be a carbonaceous material including a graphite-type crystal structure and may be either artificial graphite or natural graphite. One kind of carbonaceous material may be used alone, or two or more kinds thereof may be used in combination.

The content of the carbonaceous material in the negative electrode material is, for example, preferably 0.05% by mass or more and may be 0.10% by mass or more. The content of the carbonaceous material is, for example, 5% by mass or less and may be 3% by mass or less. These lower limit values and upper limit values can be combined arbitrarily.

The content of the carbonaceous material in the negative electrode material may be 0.05% by mass or more and 5% by mass or less, 0.05% by mass or more and 3% by mass or less, 0.10% by mass or more and 5% by mass or less, or 0.10% by mass or more and 3% by mass or less.

### (Analysis of constituent components of negative electrode material)

Hereinafter, a method of analyzing the negative electrode material or constituent components thereof will be described. Prior to analysis, a lead-acid battery after formation is fully charged and then disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60°C ± 5°C in a reduced pressure environment for about six hours. After drying, when the sticking member is included in the negative electrode plate, the sticking member is removed from the negative electrode plate by peeling. Next, the negative electrode material is separated from the negative electrode plate to obtain a sample (hereinafter referred to as sample A). The sample A is crushed if necessary and used in the analysis.

### (1) Analysis of organic expander

### (1-1) Qualitative analysis of organic expander (or organic condensate) in negative electrode material

The crushed sample A is immersed in a 1 mol/L sodium hydroxide (NaOH) aqueous solution to extract the organic expander. Next, when the extract contains a plurality of organic expanders, the plurality of organic expanders are separated from the extract. For each separated material containing each organic expander, insoluble components are removed by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. This is dried to obtain a powder sample (hereinafter, also referred to as sample B) of the organic expander.

The kind of the organic expander is specified using a combination of information acquired from an infrared spectroscopic spectrum measured using the sample B of the organic expander thus acquired, an ultraviolet-visible absorption spectrum measured using an ultraviolet-visible absorption spectrometer after the sample B is diluted with distilled water or the like, an NMR spectrum of a solution obtained by dissolving the sample B in a predetermined solvent such as heavy water, and the like.

When the extract contains a plurality of organic expanders, the separation thereof is performed as follows.

First, the extract is measured by at least one of infrared spectroscopy, NMR, or GC-MS to determine whether or not a plurality of kinds of organic expanders are contained. Next, the molecular weight distribution is measured by GPC analysis of the extract, and when the plurality of kinds of organic expanders can be separated by molecular weight, the organic expander is separated by column chromatography based on the difference in molecular weight.

Organic expanders have different solubilities when at least either of the kinds of functional groups or the amounts of functional groups are different. When it is difficult to separate the organic expanders from each other by the difference in molecular weight, one of the organic expanders is separated by a precipitation separation method utilizing such difference in solubility. For example, when two kinds of organic expanders are contained, a sulfuric acid aqueous solution is added dropwise to a mixture obtained by dissolving the extract in an NaOH aqueous solution to adjust the pH of the mixture, thereby aggregating and separating one of the organic expanders. When it is difficult to separate the organic expanders from each other by aggregation, the organic expanders are separated from each other by ion exchange chromatography or affinity chromatography utilizing the difference at least in either of the kinds or amounts of functional groups. The insoluble component is removed by filtration as described above from the separated material dissolved again in the NaOH aqueous solution. The remaining solution after separating one of the organic expanders is concentrated. The obtained concentrate contains the other organic expander, and the insoluble component is removed from the concentrate by filtration as described above.

### (1-2) Quantitative determination of content of organic expander in negative electrode material

Similarly to (1-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured using the ultraviolet-visible absorption spectrum by creating a calibration curve using the organic expander extracted from the negative electrode of the battery and a separately available organic polymer in which the ultraviolet-visible absorption spectrum, the infrared spectroscopic spectrum, the NMR spectrum, and the like exhibit similar shapes.

### (1-3) Content of sulfur element in organic expander

Similarly to (1-1) above, after the sample B of the organic expander is obtained, sulfur element in 0.1 g of the organic expander is converted into sulfuric acid by an oxygen combustion flask method. At this time, the sample B is burned in a flask containing an adsorbent to obtain an eluate in which sulfate ions are dissolved in the adsorbent. Next, the eluate is titrated with barium perchlorate using thorin as an indicator to determine the content (C1) of the sulfur element in 0.1 g of the organic expander. Next, C1 is multiplied by 10 to calculate the content (µmol/g) of the sulfur element in the organic expander per 1 g.

### (1-4) Analysis of nitrogen element content in organic expander

Similarly to (1-1) above, the sample B of the organic expander is obtained and then analyzed using an organic element analyzer (CHN analyzer) to determine the nitrogen atom content in the organic expander.

### (2) Quantitative determination of carbonaceous material and barium sulfate

To 10 g of crushed sample A, 50 ml of nitric acid having a concentration of 20% by mass is added, and the mixture is heated for about 20 minutes to dissolve the lead component as lead nitrate. Next, the solution containing lead nitrate is filtered, and solids such as carbonaceous material and barium sulfate are separated by filtration.

The obtained solid is dispersed in water to form a dispersion, and then components (for example, reinforcing material) other than the carbonaceous material and barium sulfate are removed from the dispersion by using a sieve. Next, the dispersion is subjected to suction filtration using a membrane filter of which the mass has been measured in advance, and the membrane filter is dried together with the separated sample in a dryer at 110°C ± 5°C. The obtained sample is a mixed sample of carbonaceous material and barium sulfate (hereinafter also referred to as sample C). The mass (Mₘ) of the sample C is measured by subtracting the mass of the membrane filter from the total mass of the dried sample C and membrane filter. Thereafter, the dried sample C is placed in a crucible together with the membrane filter and is burned and incinerated at 700°C or more. The residue remaining is barium oxide. The mass (M_{B}) of barium sulfate is determined by converting the mass of barium oxide into the mass of barium sulfate. The mass of the carbonaceous material is calculated by subtracting the mass M_{B} from the mass Mₘ.

### (Positive electrode plate)

The positive electrode plate of a lead-acid battery can be classified into a paste type, a clad type, and the like. The paste-type positive electrode plate includes a positive current collector and a positive electrode material. The positive electrode material is held by the positive current collector. In the paste-type positive electrode plate, the positive electrode material is the portion of the positive electrode plate excluding the positive current collector. The positive current collector may be formed by casting lead (Pb) or a lead alloy, or may be formed by processing a lead sheet or a lead alloy sheet. Examples of the processing method include expanding processing and punching processing. It is preferable to use a grid-like current collector as the positive current collector because the positive electrode material is easily supported. The clad-type positive electrode plate includes a plurality of porous tubes, a spine inserted into each tube, a current collector coupling the plurality of spines, a positive electrode material with which a spine inserted tube is filled, and a joint that couples the plurality of tubes. In the clad-type positive electrode plate, the positive electrode material is the portion of the positive electrode plate excluding the tube, the spine, the current collecting portion, and the joint. In the clad-type positive electrode plate, the spine and the current collecting portion may be collectively referred to as a positive current collector.

A member such as a mat or pasting paper may be stuck to the positive electrode plate. Such a member (sticking member) is used integrally with the positive electrode plate and is thus assumed to be included in the positive electrode plate. When the positive electrode plate includes such a member, the positive electrode material is the portion of the positive electrode plate excluding the positive current collector and the sticking member in the paste-type positive electrode plate.

As a lead alloy used for the positive current collector, a Pb-Sb alloy, a Pb-Ca alloy, or a Pb-Ca-Sn alloy are preferable from the viewpoint of corrosion resistance and mechanical strength. The positive current collector may include a surface layer. The surface layer and the inner layer of the positive current collector may have different compositions. The surface layer may be formed in a part of the positive current collector. The surface layer may be formed only on the grid portion, only on the lug, or only on the frame rib portion of the positive current collector.

The positive electrode material contained in the positive electrode plate contains a positive active material (lead dioxide or lead sulfate) that exhibits a capacity through a redox reaction. The positive electrode material may contain another additive if necessary.

A non-formed paste-type positive electrode plate is obtained by filling a positive electrode paste in a positive current collector, and curing and drying the paste. The positive electrode paste is prepared by kneading lead powder, an additive, water, and sulfuric acid. A non-formed clad-type positive electrode plate is formed by filling a porous tube, into which a spine connected by a current collecting portion is inserted, with lead powder or a slurry-like lead powder, and joining a plurality of tubes with a joint. Thereafter, the positive electrode plate is obtained by forming the non-formed positive electrode plates. The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

### (Separator)

The separator can be disposed between the negative electrode plate and the positive electrode plate. As the separator, at least one selected from a nonwoven fabric or a microporous membrane is used. The thickness of separators interposed between the negative electrode plate and the positive electrode plate may be selected in accordance with the distance between the electrodes. The number of separators may be selected in accordance with the number of poles.

The nonwoven fabric is a mat in which fibers are intertwined without being woven and is mainly composed of fibers. In the nonwoven fabric, for example, 60% by mass or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among these, glass fibers are preferable. The nonwoven fabric may contain components in addition to the fibers, such as acid-resistant inorganic powder, a polymer as a binder, and the like.

On the other hand, the microporous film is a porous sheet mainly composed of components except for fiber components and is obtained by, for example, extrusion molding a composition containing, for example, a pore-forming additive (polymer powder, oil, and/or the like) into a sheet shape and then removing the pore-forming additive to form pores. The microporous film is preferably composed of a material exhibiting acid resistance and is preferably composed mainly of a polymer component. As the polymer component, a polyolefin (polyethylene, polypropylene or the like) is preferable.

The separator may be, for example, composed of only a nonwoven fabric or composed of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded portion is along the horizontal direction of the lead-acid battery (for example, such that the bent portion may be parallel to the horizontal direction), and the separator may be disposed such that the folded portion is along the vertical direction (for example, such that the bent portion is parallel to the vertical direction). In the separator folded in the bellows shape, recesses are alternately formed on both main surface sides of the separator. Since the lugs are usually formed on the upper portion of each of the positive electrode plate and the negative electrode plate, when the separator is disposed such that the folded portions are along the horizontal direction of the lead-acid battery, the positive electrode plate and the negative electrode plate are disposed only in the recess on one main surface side of the separator (that is, a double separator is interposed between the adjacent positive and negative electrode plates). When the separator is disposed such that the folded portion is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative plates). When the bag-shaped separator is used, the bag-shaped separator may house the positive electrode plate or may house the negative electrode plate.

In the present specification, the up-down direction of the plate means the up-down direction of the lead-acid battery in the vertical direction.

### (Electrolyte solution)

The electrolyte solution is an aqueous solution containing sulfuric acid and may be gelled if necessary. The electrolyte solution may contain at least one selected from the group consisting of cations (for example, metal cations) and anions (for example, anions (phosphate ions and the like) other than sulfate anions) if necessary. Examples of the metal cations include at least one selected from the group consisting of a sodium ion, a lithium ion, a magnesium ion, and an aluminum ion.

The specific gravity of the electrolyte solution in the lead-acid battery in the fully charged state at 20°C is, for example, 1.20 or more, and may be 1.25 or more. The specific gravity of the electrolyte solution at 20°C is 1.35 or less, preferably 1.32 or less. These lower limit values and upper limit values can be combined arbitrarily. The specific gravity of the electrolyte solution at 20°C may be 1.20 or more and 1.35 or less, 1.20 or more and 1.32 or less, 1.25 or more and 1.35 or less, or 1.25 or more and 1.32 or less.

The lead-acid battery can be obtained by a production method including a step of assembling a lead-acid battery by housing a positive electrode plate, a negative electrode plate, and an electrolyte solution in a container. In the assembly process of the lead-acid battery, the separator is usually disposed so as to be interposed between the positive electrode plate and the negative electrode plate. The assembly process of the lead-acid battery may include a step of forming at least either of the positive electrode plate or the negative electrode plate if necessary after the step of housing the positive electrode plate, the negative electrode plate, and the electrolyte solution in the container. The positive electrode plate, the negative electrode plate, the electrolyte solution, and the separator are each prepared before being housed in the container.

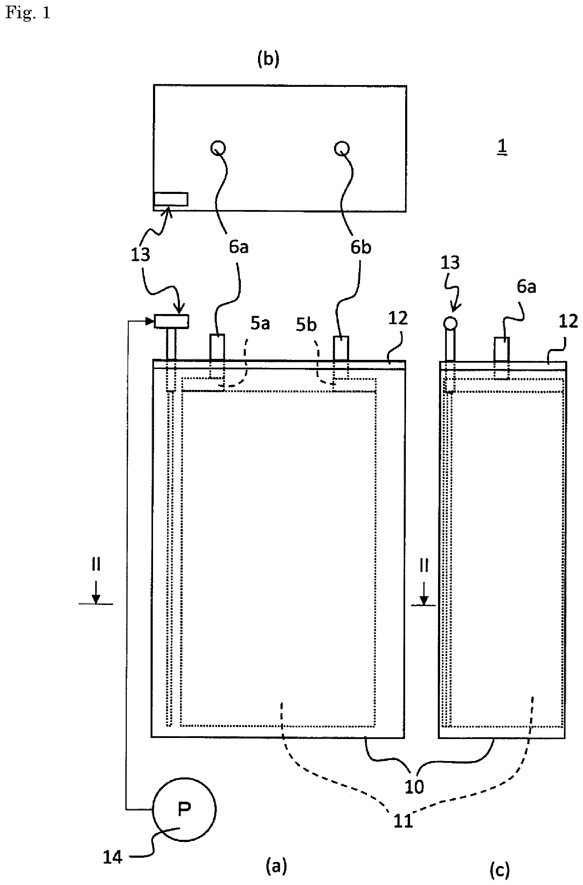

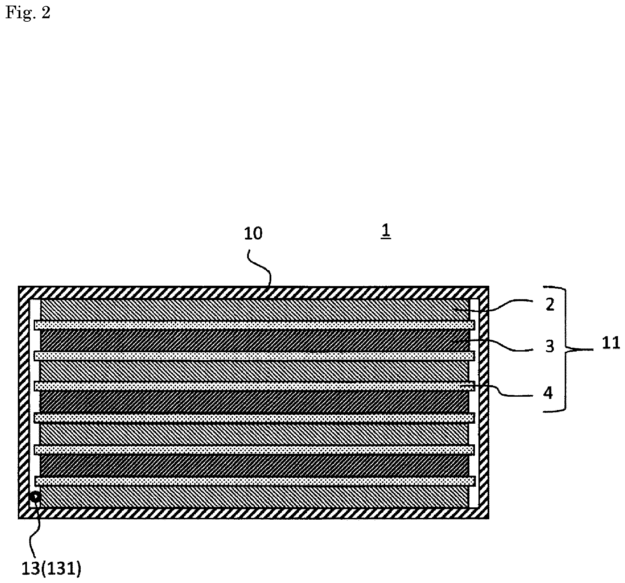

Fig. 1 is a front view (a), a top view (b), and a side view (c) of an example of the lead-acid battery according to the present invention. Fig. 2 is a cross-sectional view taken along the line II-II in Fig. 1(a).

A lead-acid battery 1 includes an element 11, an electrolyte solution (not illustrated), a container 10 for housing these, and a lid 12 that closes the opening of the container 10. The element 11 is configured by stacking a plurality of negative electrode plates 2 and a plurality of positive electrode plates 3 with a separator 4 interposed therebetween. A through hole is provided at one of the four corners of the lid, and a blower 13 is inserted into the through hole.

A lug for current collection (not illustrated) protruding upward is provided on the upper portion of each of the plurality of negative electrode plates 2, and the lugs of the negative electrode plate 2 are connected and integrated by a negative electrode strap 5a. Similarly, a lug for current collection (not illustrated) protruding upward is provided on the upper portion of each of the plurality of positive electrode plates 3, and the lugs of the positive electrode plate 3 are connected and integrated by a positive electrode strap 5b. A negative pole 6a is fixed to the negative electrode strap 5a, and a positive pole 6b is fixed to the positive electrode strap 5b.

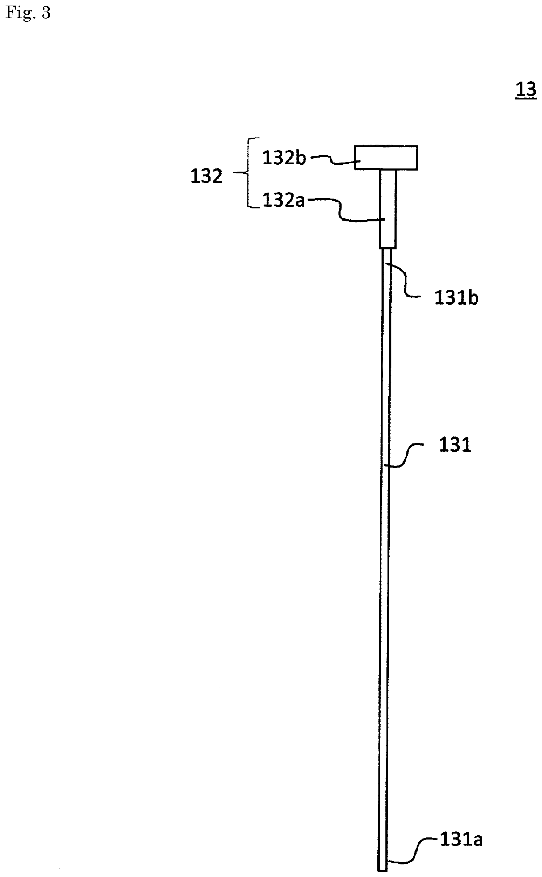

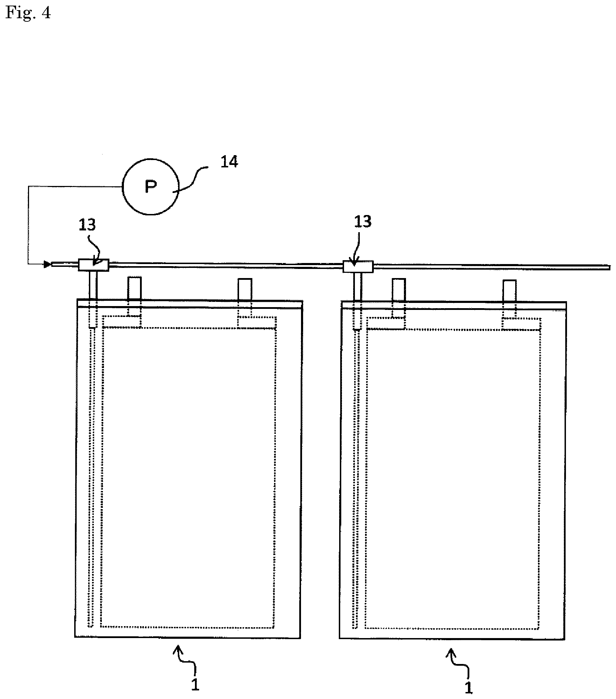

Fig. 3 schematically illustrates the appearance of an example of a blower. The blower 13 is composed of a blower tube 131 and a connector 132. The blower tube 131 has a lower end 131a disposed at the lower portion of the container 10 and an upper end 131b connected to the connector 132. The connector 132 has a cylindrical insertion portion 132a that is inserted into the through hole provided in the lid 12, and a T-shaped portion 132b that is entirely disposed outside the lid 12. The upper end 131b of the blower tube 131 is connected to the insertion portion 132a by insertion. As illustrated in Fig. 1, the T-shaped portion 132b is connected to an air supplier 14 by another blower tube. When a plurality of lead-acid batteries 1 form an assembled battery, a plurality of blowers 13 are connected by utilizing the T-shaped portion 132b as illustrated in Fig. 4.

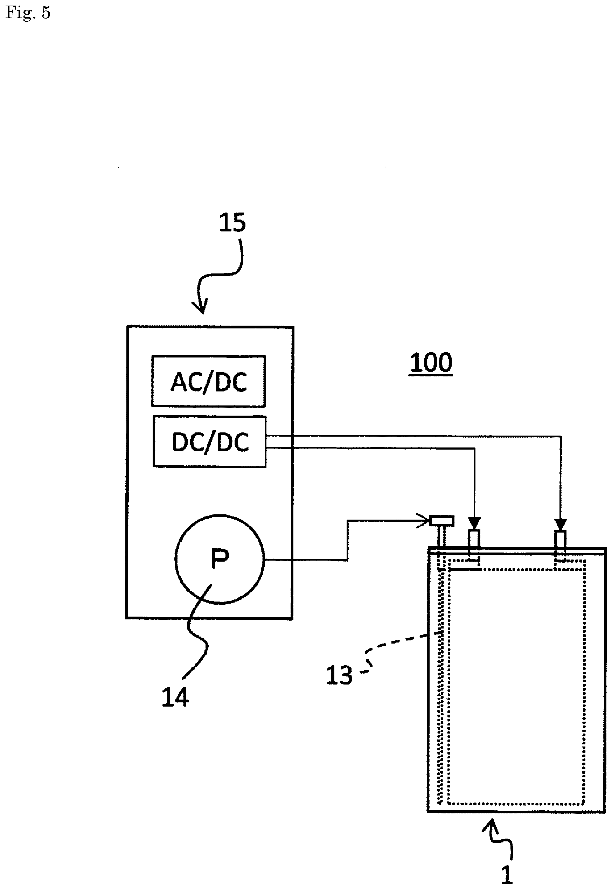

Fig. 5 is a block diagram illustrating the configuration of an example of the power supply according to the present invention. A power supply 100 includes a charger 15 that performs charge of the lead-acid battery. The air supplier 14 is mounted on the charger 15 and is integrally configured with the charger 15. In the power supply 100, the air supplier 14 is operated to send air into the electrolyte solution via the blower 13 during or after charge of the lead-acid battery by the charger 15, and the electrolyte solution is agitated.

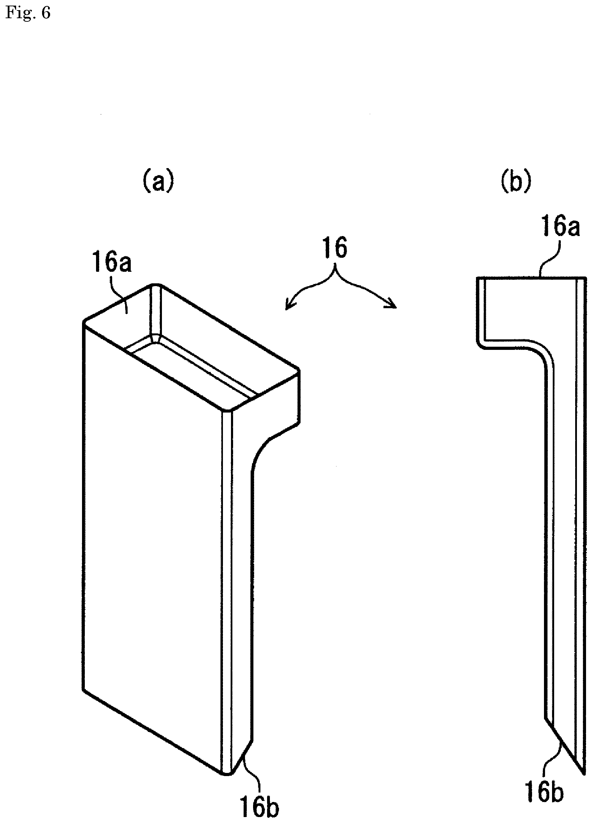

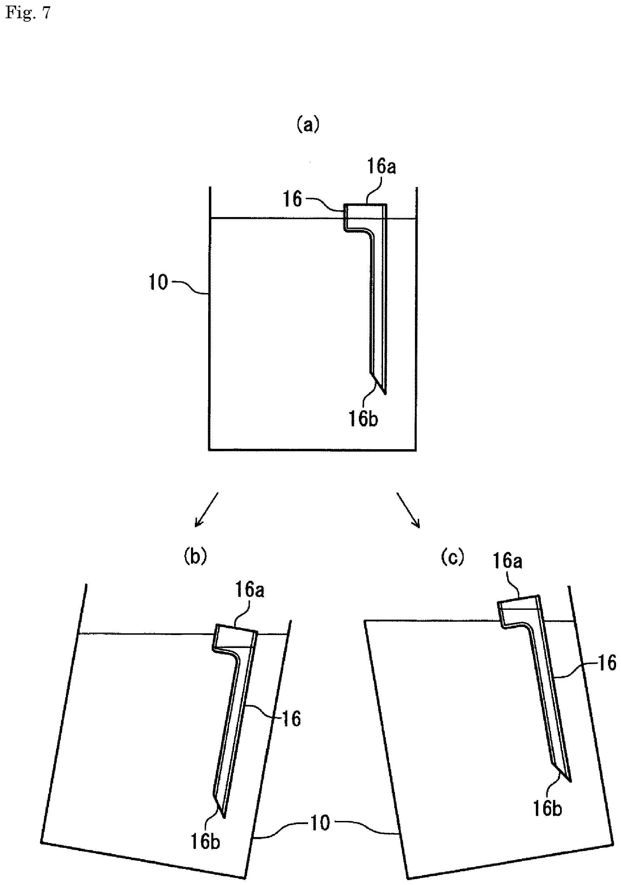

Next, a case where the auxiliary member is a mixing element will be described with reference to Figs. 6 and 7. Fig. 6 is a perspective view (a) and a cross-sectional view (b) schematically illustrating an example of a swing-type agitator. Fig. 7 is an explanatory diagram illustrating the principle of electrolyte solution agitation by a swing-type agitator.

An agitator 16 has a hollow structure as a whole, and has an upper opening 16a and a lower opening 16b at the upper end and the lower end in the vertical direction, respectively. The cross-sectional area S perpendicular to the vertical direction of the hollow decreases from the upper part to the lower part, and a large cross-sectional area S is formed at the upper part of the agitator 16 and a small cross-sectional area S is formed at the lower part. The upper opening 16a has a large opening upward in the vertical direction.

The upper opening 16a is located above the liquid surface of the electrolyte solution. In a state where inertial force is not applied to the electrolyte solution, the liquid surface inside the upper opening 16a is at the same level as that of the liquid surface in the container 10 as illustrated in Fig. 7(a). When inertial force acts on the electrolyte solution, and the lower part of the agitator16 is inclined to the left at a predetermined angle as illustrated in Fig. 7(b), the level of the liquid surface inside the upper opening 16a becomes lower than the level of the liquid surface in the container 10. In other words, the agitator 16 moves relative to the electrolyte solution. At this time, the electrolyte solution retained at the lower portion of the container flows into the agitator 16 from the lower opening 16b of the agitator 16 and moves upward. Next, when the lower part of the agitator 16 is inclined to the right by a predetermined angle as illustrated in Fig. 7(c), on the contrary, the level of the liquid surface inside the upper opening 16a becomes higher than the level of the liquid surface in the container 10. At this time as well, the agitator 16 moves relative to the electrolyte solution. Therefore, the electrolyte solution in the agitator 16 flows out from the lower opening 16b to the lower portion of the container, and the electrolyte solution is agitated. For example, when a lead-acid battery is mounted on the vehicle, inertial force is spontaneously generated as the vehicle drives, and it is not necessary to supply electric power for the purpose of generating inertial force.

The lead-acid battery according to the present invention will be summarized below.
(1) A lead-acid battery including a cell, an electrolyte solution in which the cell is immersed, a container that accommodates the cell and the electrolyte solution, a lid that seals the opening of the container, and an auxiliary member that assists in agitating the electrolyte solution, in which
   the cell includes a positive electrode plate, a negative electrode plate, and a separator interposed between the positive electrode plate and the negative electrode plate,
   the negative electrode plate includes a negative current collector and a negative electrode material, and
   the negative electrode material contains an organic condensate.
(2) The lead-acid battery according to claim 1, in which a content of the organic condensate in the negative electrode material is 0.03% by mass or more and 0.3% by mass or less in (1).
(3) The lead-acid battery according to (1) or (2), in which the organic condensate contains a unit of an aromatic compound, and
   the aromatic compound has a sulfur-containing group.
(4) The lead-acid battery according to (3), in which the aromatic compound includes at least one selected from the group consisting of a bisarene compound and a monocyclic compound.
(5) The lead-acid battery according to (4), in which the aromatic compound includes both a bisarene compound and a monocyclic compound.
(6) The lead-acid battery according to (4) or (5), in which the bisarene compound includes a bisphenol compound.
(7) The lead-acid battery according to (6), in which the bisphenol compound includes at least one selected from the group consisting of bisphenol A and bisphenol S.
(8) The lead-acid battery according to any one of (4) to (7), in which the monocyclic compound includes a hydroxyarene compound.
(9) The lead-acid battery according to (8), in which the hydroxyarene compound includes a phenol sulfonic acid compound.
(10) The lead-acid battery according to any one of (1) to (9), in which a sulfur element content in the organic condensate is 2000 pmol/g or more.
(11) The lead-acid battery according to any one of (1) to (10), in which the auxiliary member is a blower that sends air to the electrolyte solution.
(12) The lead-acid battery according to (11), in which the lid is provided with a through hole, and
   the blower is inserted into the through hole and has one end immersed in the electrolyte solution and the other end communicating with outside of the lid.
(13) A power supply including the lead-acid battery according to (11) or (12) and an air supplier that sends air to the blower.
(14) The power supply according to (13), further including a charger that performs charge of the lead-acid battery, in which
   the air supplier is mounted on the charger.
(15) The lead-acid battery according to any one of (1) to (11), in which the auxiliary member is an agitator that agitates the electrolyte solution by moving in the lead-acid battery.
(16) A method of using the power supply according to (14), the method including:
   a step of operating the air supplier to send air into the electrolyte solution via the blower during or after charge of the lead-acid battery by the charger and agitating the electrolyte solution.

### [EXAMPLES]

Hereinafter, the present invention will be specifically described based on Examples and Comparative Examples, but the present invention is not limited to the following Examples.

### <<Lead-acid battery R1>>

### (a) Fabrication of negative electrode plate

Lead powder, barium sulfate, and carbon black as raw materials, and sodium lignin sulfonate that is an organic expander (sulfur element content: 600 µmol/g, Mw = 5500) are mixed with an appropriate amount of sulfuric acid aqueous solution to obtain a negative electrode paste. At this time, the respective components are mixed so that the content of barium sulfate is 1.5% by mass, the content of carbon black is 0.3% by mass, and the content of the organic expander is 0.1% by mass in the negative electrode material, all of which are determined by the procedures described above. The negative electrode paste is filled in a mesh portion of a Pb-Sb alloy cast grid that is a negative current collector, and cured and dried to obtain a non-formed negative electrode plate.

### (b) Fabrication of positive electrode plate

A clad-type positive electrode plate is fabricated by the following procedure.

First, a plurality of spines having one end in the length direction integrated to a current collecting portion provided with a lug are each housed in a plurality of tubes. The current collecting portion and one end of the tube in the length direction on the current collecting portion side are covered with resin so that the lugs are exposed, to form a resin upper joint. The materials of the spine and current collecting portion are Pb-Sb-based alloys. As the tube, a glass fiber porous tube is used.

A positive electrode slurry prepared by kneading lead powder (containing 80% by mass of lead oxide and 20% by mass of metal lead), red lead, water, and dilute sulfuric acid is filled through the opening at the other end in the length direction of the tube. The mass ratio of lead powder to red lead is set to 8 : 2. The opening at the other end of the tube is then sealed with the lower joint and dried. In this way, a non-formed clad-type positive electrode plate is fabricated.

### (c) Fabrication of test battery

A flooded-type battery having a rated voltage of 2 V and a rated 5-hour rate capacity of 165 Ah is fabricated. An element of the test battery includes three positive electrode plates and four negative electrode plates sandwiching the positive electrode plates. A positive electrode plate and a negative electrode plate are stacked with a glass fiber nonwoven fabric separator interposed therebetween to form an element. The element is housed in a polyethylene container together with an electrolyte solution (sulfuric acid aqueous solution), covered, and subjected to formation in the container to fabricate a flooded-type lead-acid battery R1. The specific gravity of the electrolyte solution after formation is 1.28 at 20°C. The height of the battery is 426 mm (height from the bottom to the liquid surface of the container: 338 mm), and the amount of the electrolyte solution is 1700 mL. The lead-acid battery R1 is a battery of Comparative Example.

### [Evaluation 1]

The charge-discharge cycle of the lead-acid battery is repeated at a temperature of 30°C ± 0.5°C under the following conditions prescribed by JIS D5303.

Discharge: Discharge is performed for 3 hours at a current (A) to be 0.25 time the numerical value of Ah described as the rated capacity.

Charge: Charge is performed to an amount to be 110% of the discharge capacity at a current (A) to be 0.18 time the numerical value of Ah described as the rated capacity.

During the charge-discharge cycle, the low-temperature high-rate discharge performance is measured every 100 cycles.

The test battery after full charge is discharged at a discharge current of 165 A and -15°C until the terminal voltage reaches 1.0 V/cell, and the discharge time at this time is determined. As the discharge duration time is longer, the low-temperature high-rate discharge performance is superior. The low-temperature high-rate discharge performance (indicated as LTHR performance in the table) of each battery is evaluated by the ratio (%) to 100 of the initial (after one cycle) discharge duration time of the lead-acid battery R1.

### <<Lead-acid battery R2>>

Prepared is a blower having a blower tube with a diameter of 5 mm as illustrated in Fig. 3. A through hole is provided in one corner of the lid of a battery fabricated similarly to the battery R1, and the blower is fixed in the through hole so that the lower end of the blower tube reaches near the bottom of the container, thereby fabricating a battery R2. The battery R2 is evaluated similarly to the battery R1 except that air is supplied from the compressor to the blower during charge and air is circulated from the lower end of the blower tube into the electrolyte solution at a flow rate of 350 mL/min. The lead-acid battery R2 is a battery of Comparative Example.

### <<Lead-acid batteries R3 to R5>>

Batteries R3 to R5 are fabricated similarly to the battery R1 except that the following organic expanders are used instead of sodium lignin sulfonate, and evaluated similarly. The lead-acid batteries R3 to R5 are batteries of Comparative Examples. The condensate A is used for the battery R3, the condensate B is used for R4, and the condensate C is used for R5.

Condensate A: Condensate of bisphenol A compound having sulfonic acid group introduced and bisphenol S compound with formaldehyde (sulfur element content: 4000 µmol/g, Mw = 9000)

Condensate B: Condensate of bisphenol S compound and phenol sulfonic acid with formaldehyde (sulfur element content: 4000 µmol/g, Mw = 8000)

Condensate C: Condensate of bisphenol A compound having sulfonic acid group introduced and phenol sulfonic acid with formaldehyde (sulfur element content: 4,000 µmol/g, Mw = 8,000)

### <<Lead-acid batteries E1 to E3>>

Batteries E1 to E3 are fabricated similarly to the battery R2 except that the condensates A, B and C are used instead of sodium lignin sulfonate, and evaluated similarly. The lead-acid batteries E1 to E3 are batteries of Examples. The condensate A is used for the battery E1, the condensate B is used for E2, and the condensate C is used for E3.

Table 1 presents the low-temperature high-rate discharge performance (LTHR performance) of the batteries R1, R2, and E1 to E3 up to 300 cycles. Sodium lignin sulfonate, which is a lignin compound, is simply referred to as "lignin". The numerical value is the ratio (%) to 100 of the initial (after one cycle) discharge duration time of the battery R1, and the low-temperature high-rate discharge performance is superior as the numerical value is larger.

**[Table 1]**

| Organic expander | | Agitation of electrolyte solution | Number of cycles | | | |
|---|---|---|---|---|---|---|
| | | | **1** | **100** | **200** | **300** |
| LTHR performance | **R1** (lignin) | No | **100** | **8 1** | **76** | **74** |
| | **R2** (lignin) | Yes | **100** | **92** | **82** | **76** |
| | **E1 (A)** | Yes | **102** | **93** | **88** | **85** |
| | **E2 (B)** | Yes | **103** | **94** | **90** | **86** |
| | **E3 (C)** | Yes | **102** | **94** | **89** | **85** |

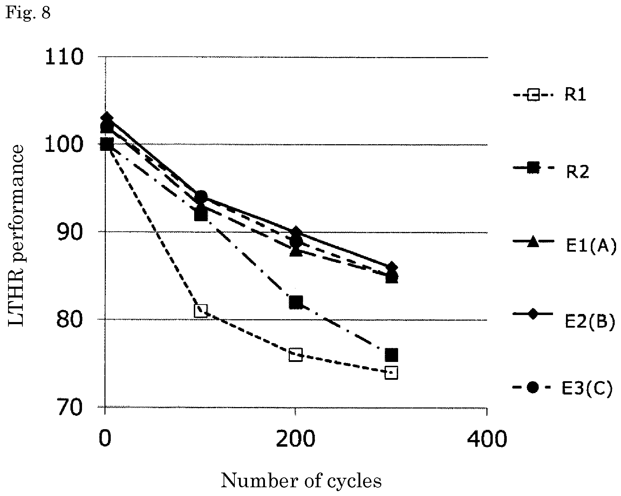

Next, Fig. 8 illustrates the relation between the low-temperature high-rate discharge performance of the batteries R1, R2, and E1 to E3 and the number of charge-discharge cycles. From Table 1 and Fig. 8, when a lignin compound is used as the organic expander as well, it can be understood that stratification of the battery R2 in which air is circulated into the electrolyte solution during charge, is suppressed and the low-temperature high-rate discharge performance is favorably maintained up to about 100 to 200 cycles. However, when charge-discharge is repeated up to about 300 cycles, it can be seen that the agitation effect of the electrolyte solution is saturated, the progress of stratification cannot be suppressed, and the low-temperature high-rate discharge performance of the battery R2 decreases to the same level as that of the battery R1.

On the other hand, when an organic condensate is used, the low-temperature high-rate discharge performance is favorably maintained when the charge-discharge cycle exceeds 300 cycles as well. It is considered that this is because the expansion of the negative electrode material is suppressed, thus the agitation efficiency of the electrolyte solution is not saturated, and the stratification is suppressed for a long period of time.

Next, Table 2 presents the low-temperature high-rate discharge performance (LTHR performance) of the batteries R1, R2, R3 to R5, and E1 to E3 in the 500th cycle. As in Table 1, the numerical value is the ratio (%) to 100 of the initial (after one cycle) discharge duration time of the battery R1, and the low-temperature high-rate discharge performance is superior as the numerical value is larger.

**[Table 2]**

| Organic expander | | Agitation of electrolyte solution | Number of cycles | | Difference from R1 |
|---|---|---|---|---|---|
| | | | 1 | 500 | |
| LTHR performance | **R1** (lignin) | No | **100** | **61** | **0** |
| | **R2** (lignin) | Yes | **100** | **65** | **+4** |
| | **R3 (A)** | No | **102** | **69** | **+8** |
| | **R4 (B)** | No | **103** | **72** | **+11** |
| | **R5 (C)** | No | **102** | **70** | **+9** |
| | **E1 (A)** | Yes | **102** | **84** | **+23** |
| | **E2 (B)** | Yes | **103** | **91** | **+30** |
| | **E3 (C)** | Yes | **102** | **87** | **+26** |

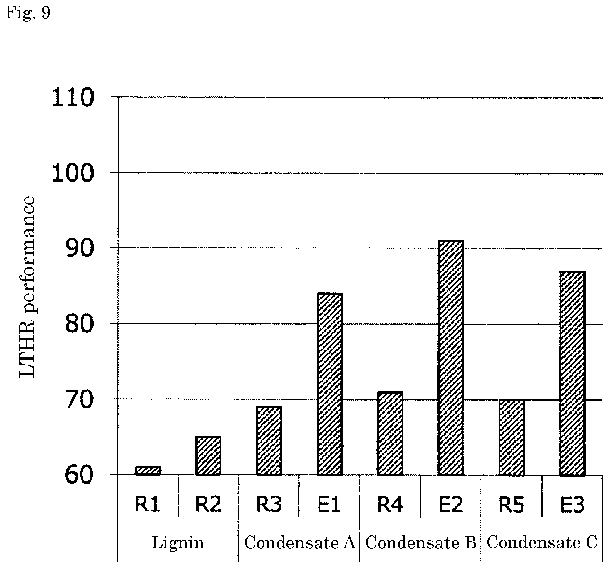

Fig. 9 illustrates the low-temperature high-rate discharge performance of the batteries R1, R2, R3 to R5, and E1 to E3 in the 500th cycle in comparison. From Table 2 and Fig. 9, it can be understood that the low-temperature high-rate discharge performance significantly decreases in the case of circulating air into the electrolyte solution during charge as well when a lignin compound is used as the organic expander but the low-temperature high-rate discharge performance is favorably maintained when the charge-discharge cycle reaches 500 cycles as well in the case of using an organic condensate as the organic expander. Here, particularly when the difference in low-temperature high-rate discharge performance between the battery R1 and the other batteries are compared, it can be easily understood that the superiority of batteries E1 to E3 stands out. Among these, it can be understood that the superiority is great when the condensate B is used.

It is presumed that the sulfur content in the organic expander affects the above order. The sulfur element content in the lignin compound is 600 µmol/g, but the sulfur element contents in the condensates A, B and C are all 2000 pmol/g or more. The condensates B and C contain both of a unit of a bisarene compound and a unit of a monocyclic compound (particularly a hydroxyarene compound), and the condensate A contains a unit of a bisarene compound. Such a structural difference is considered to be related to the difference in the effect of suppressing the expansion of the negative electrode material.

### [Evaluation 2]

Next, the rate of upper short circuit occurrence in the batteries R1, R2 and E1 to E3 is evaluated. Specifically, the rate of upper short circuit occurrence is evaluated by the proportion of the number of cells in which a sharp decrease in capacity occurs at the end stage of discharge and the occurrence of upper short circuit is confirmed when eighteen cells having the same configuration are prepared and subjected to a charge-discharge cycle test under the same conditions as those in the evaluation 1. Table 3 presents the results.

**[Table 3]**

| | **R1** Without agitation of electrolyte solution | **R2** With agitation of electrolyte solution | **E1 (A)** With agitation of electrolyte solution | **E2 (B)** With agitation of electrolyte solution | **E3 (C)** With agitation of electrolyte solution |
|---|---|---|---|---|---|
| Rate of upper short circuit occurrence | **22%** | **44%** | **11%** | **6%** | **6%** |

Table 3 presents that the rate of upper short circuit occurrence significantly decreases when organic condensates are used. Such a rate of upper short circuit occurrence is significantly increased in the battery R2 compared to battery R1, and this is a problem peculiar to lead-acid batteries (namely, batteries in which winding up of sediment is likely to occur) in which the electrolyte solution is initiatively agitated by utilizing an auxiliary member that assists in agitating the electrolyte solution. Meanwhile, when organic condensates are used as in the batteries E1 to E3, such a problem of upper short circuit is also significantly decreased.

### «Lead-acid batteries E11 to E17»

Lead-acid batteries E11 to E17 are fabricated similarly to the battery E 1 except that the content of condensate A in the negative electrode material is changed as presented in Table 4, and the low-temperature high-rate discharge performance (LTHR performance) in the 500th cycle is evaluated similarly to that of the battery E1. The initial capacity test of the lead-acid battery is performed at a temperature of 30°C under the following conditions. Table 4 presents the results. The initial capacity is a value relative to 100 of the initial capacity of the battery E12. As in Table 1, the numerical value of LTHR performance is the ratio (%) to 100 of the initial (after one cycle) discharge duration time of the battery R1.

### [Evaluation 3]

### <Initial capacity test>

Discharge: Discharge is performed to a final voltage of 1.7 V/cell at a current (A) to be 0.2 time the numerical value of Ah described as the rated capacity.

Charge: Charge is performed to 130% of the discharge capacity at a current (A) to be 0.2 time the numerical value of Ah described as the rated capacity.

**[Table 4]**

| Battery | **E11** | **E12** | **E13** | **E1** | **E14** | **E15** | **E16** | **E17** |
|---|---|---|---|---|---|---|---|---|
| Content of condensate A (% by mass) | **0.01** | **0.03** | **0.05** | **0.1** | **0.15** | **0.2** | **0.3** | **0.4** |
| 500-cycle LTHR performance | **64** | **81** | **83** | **84** | **84** | **86** | **87** | **87** |
| Initial capacity | **91.3** | **100** | **102** | **104.6** | **103.1** | **100.3** | **97.1** | **89. 6** |

### «Lead-acid batteries E21 to E27»

Lead-acid batteries E21 to E27 are fabricated similarly to the battery E2 except that the content of condensate B in the negative electrode material is changed as presented in Table 5, and the low-temperature high-rate discharge performance (LTHR performance) in the 500th cycle is evaluated similarly to that of the battery E2. Table 5 presents the results. As in Table 1, the numerical value of LTHR performance is the ratio (%) to 100 of the initial (after one cycle) discharge duration time of the battery R1.

**[Table 5]**

| Battery | **E21** | **E22** | **E23** | **E2** | **E24** | **E25** | **E26** | **E27** |
|---|---|---|---|---|---|---|---|---|
| Content of condensate B (% by mass) | **0.01** | **0.03** | **0.05** | **0.1** | **0.15** | **0.2** | **0.3** | **0.4** |
| 500-cycle LTHR performance | **66** | **84** | **88** | **91** | **91** | **93** | **93** | **94** |

### «Lead-acid batteries E31 to E37»

Lead-acid batteries E31 to E37 are fabricated similarly to the battery E3 except that the content of condensate C in the negative electrode material is changed as presented in Table 6, and the low-temperature high-rate discharge performance (LTHR performance) in the 500th cycle is evaluated similarly to that of the battery E3. Table 6 presents the results. As in Table 1, the numerical value of LTHR performance is the ratio (%) to 100 of the initial (after one cycle) discharge duration time of the battery R1.

**[Table 6]**

| Battery | **E31** | **E32 E33 E3** | | | **E34** | **E35** | **E36** | **E37** |
|---|---|---|---|---|---|---|---|---|
| Content of condensate C (% by mass) | **0.01** | **0.03 0.05** | | **0.1** | **0.15** | **0.2** | **0.3** | **0.4** |
| 500-cycle LTHR performance | **64** | **83** | **86** | **87** | **87** | **88** | **90** | **91** |

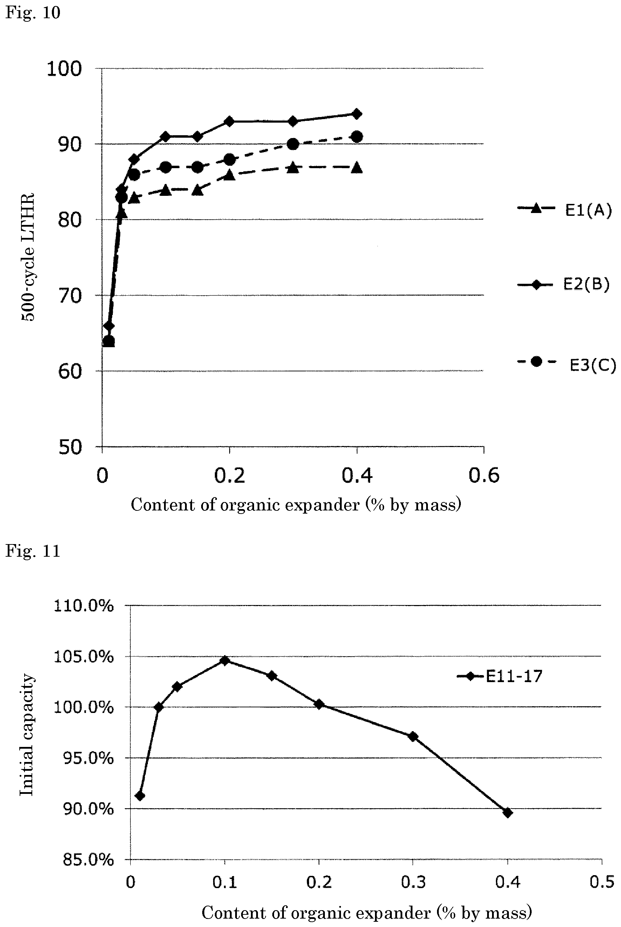

Fig. 10 illustrates the relation between the content of the organic condensate contained in the negative electrode material and the low-temperature high-rate discharge performance in the 500th cycle. Fig. 11 illustrates the relation between the content of the organic condensate contained in the negative electrode material and the initial capacity. From Tables 4 to 6 and Figs. 10 and 11, it can be seen that the low-temperature high-rate discharge performance in the 500th cycle is more favorably maintained as the content of the organic condensate is higher. However, as presented in Table 4, the initial capacity tends to decrease when the content of the organic condensate is excessively high. From the viewpoint of the balance between the low-temperature high-rate discharge performance and the initial capacity, the content of the organic condensate contained in the negative electrode material is optimally in a range of 0.03% to 0.3% by mass.

### DESCRIPTION OF REFERENCE SIGNS

- 1:: Lead-acid battery
- 2:: Negative electrode plate
- 3:: Positive electrode plate
- 4:: Separator
- 5a:: Negative electrode strap
- 5b:: Positive electrode strap
- 6a:: Negative pole
- 6b:: Positive pole
- 10:: Container
- 11:: Element
- 12:: Lid
- 13:: Blower
- 131:: Blower tube
- 131a:: Lower end
- 131b:: Upper end
- 132:: Connector
- 132a:: Insertion portion
- 132b:: T-shaped portion
- 14:: Air supplier
- 15:: Charger
- 16:: Agitator
- 16a:: Upper opening
- 16b:: Lower opening
- 100:: Power supply

## Claims

1. A lead-acid battery comprising:
a cell, an electrolyte solution in which the cell is immersed;
a container that houses the cell and the electrolyte solution;
a lid that seals an opening of the container; and
an auxiliary member that assists in agitating the electrolyte solution,
wherein the cell includes:
a positive electrode plate;
a negative electrode plate; and
a separator interposed between the positive electrode plate; and
the negative electrode plate,
the negative electrode plate includes a negative current collector and a negative electrode material, and
the negative electrode material contains an organic condensate.

2. The lead-acid battery according to claim 1, wherein a content of the organic condensate in the negative electrode material is 0.03% by mass or more and 0.3% by mass or less.

3. The lead-acid battery according to claim 1 or 2, wherein
the organic condensate contains a unit of an aromatic compound, and
the aromatic compound has a sulfur-containing group.

4. The lead-acid battery according to claim 3, wherein the aromatic compound includes at least one selected from the group consisting of a bisarene compound and a monocyclic compound.

5. The lead-acid battery according to claim 4, wherein the aromatic compound includes both a bisarene compound and a monocyclic compound.

6. The lead-acid battery according to claim 4 or 5, wherein the bisarene compound includes a bisphenol compound.

7. The lead-acid battery according to claim 6, wherein the bisphenol compound includes at least one selected from the group consisting of bisphenol A and bisphenol S.

8. The lead-acid battery according to any one of claims 4 to 7,
wherein the monocyclic compound includes a hydroxyarene compound.

9. The lead-acid battery according to claim 8, wherein the hydroxyarene compound includes a phenol sulfonic acid compound.

10. The lead-acid battery according to any one of claims 1 to 9, wherein a sulfur element content in the organic condensate is 2000 pmol/g or more.

11. The lead-acid battery according to any one of claims 1 to 10, wherein the auxiliary member is a blower that sends air to the electrolyte solution.

12. The lead-acid battery according to claim 11, wherein
the lid is provided with a through hole, and
the blower is inserted into the through hole and has one end immersed in the electrolyte solution and the other end communicating with outside of the lid.

13. A power supply comprising the lead-acid battery according to any one of claims 11 to 12 and an air supplier that sends air to the blower.

14. The power supply according to claim 13, further comprising a charger that performs charge of the lead-acid battery, wherein
the air supplier is mounted on the charger.

15. The lead-acid battery according to any one of claims 1 to 10, wherein the auxiliary member is an agitator that agitates the electrolyte solution by moving in the lead-acid battery.

16. A method of using the power supply according to claim 14, the method comprising:
a step of operating the air supplier to send air into the electrolyte solution via the blower during or after charge of the lead-acid battery by the charger and agitating the electrolyte solution.
